# EUROPEAN PATENT APPLICATION

(11) **EP 1 967 542 A1**
(43) Date of publication of application: **10.09.2008**
(21) Application number: 06843205.3
(22) Date of filing: 25.12.2006
(51) Int. Cl.: C08J 5/18, C08K 5/29, C08L 23/00, C08L 67/00

(54) **POLYOLEFIN/POLYESTER FILM**

(30) Priority: 26.12.2005 JP 2005372704
(71) Applicant: Nisshinbo Industries, Inc., Chuo-ku, Tokyo 103-8650 (JP)
(72) Inventor: TAKAHASHI, Ikuo, Chiba-shi Chiba 267-0056 (JP); IIDA, Hirotaka, Chiba-shi Chiba 267-0056 (JP)
(74) Representative: Gille Hrabal Struck Neidlein Prop Roos
(86) International application number: PCT/JP2006/325821
(87) International publication number: WO 2007/074790

(57) **Abstract**

A stretched film which is obtained from a resin composition comprising a polyolefin, a polyester and a compatibilizing agent, wherein at least the surface of the film has micropores. The film has improved property for printing and, in particular, improved property for gravure printing.

## Description

### TECHNICAL FIELD

The present invention relates to a polyolefin-polyester-based film. More particularly, the present invention relates to a polyolefin-polyester- based film which is obtained from a resin composition comprising a polyolefin, a polyester and a compatibilizing agent for the polyolefin and the polyester and has a surface structure exhibiting excellent property for printing.

### BACKGROUND ART

It has been known that a polyolefin-based composition can be molded into a shape of a film having a porous structure. In the film, the porous structure is provided by stretching a film obtained from the resin composition of raw materials (for example, refer to Patent Reference 1). It is also known that a compatibilizing agent is added as an additive so that compatibility between a polyolefin and a polyester is improved (for example, refer to Patent Reference 2). The compatibilizing agent is used to directly improve physical properties of the resin composition comprising a polyolefin and a polyester as the raw materials.

However, polyolefin-polyester-based films provided with the porous structure exhibit inferior property for printing and, in particular, inferior property for gravure printing than cellulose-based films. The improvement in the property for printing has been desired, and various means for improving physical properties of the surface such as addition of fillers to the resin composition of raw materials and formation of a coating layer on the film obtained after stretching have been required (for example, refer to Patent Reference 3). Molding materials comprising a resin composition containing a compatibilizing agent have been known as the material for improving impact resistance of various molded articles such as containers, pallets, gasoline tanks, materials for civil working and high precision instruments.

[Patent Reference 1] Japanese Patent Publication No. Showa 50 (1975)-38665
[Patent Reference 2] Japanese Patent Application Laid-Open No. 2005-307157
[Patent Reference 3] Japanese Patent Application Laid-Open No. 2002-146071

### DISCLOSURE OF THE INVENTION

### [Problems to be Solved by the Invention]

The present invention has an object of providing a polyolefin-polyester-based film exhibiting improved property for printing and, in particular, improved property for gravure printing.

### [Means for Solving the Problems]

As the result of intensive studies by the present inventors to develop the polyolefin-polyester-based film exhibiting the advantageous property, it was found that the object could be achieved by obtaining a film from a resin composition comprising a polyolefin, a polyester and a compatibilizing agent for the polyolefin and the polyester and forming a mesh-shaped structure having micropores or ridges on the surface of the film by stretching the obtained film. The present invention has been made based on this finding.
The present invention provides:
(1) A film which is a stretched film obtained from a resin composition comprising (A) a polyolefin, (B) a polyester in an amount of 30 to 350 parts by mass based on 100 parts by mass of the polyolefin, and (C) a compatibilizing agent in an amount of 0.1 to 15 parts by mass based on 100 parts by mass of a sum of amounts of component (A) and component (B), wherein surface of the film has micropores;
(2) The film described in (1), wherein the compatibilizing agent of component (C) is a carbodiimide compound;
(3) The film described in (1) or (2), wherein the polyester of component (B) is an aliphatic polyester based on polylactic acid;
(4) The film described in any one of (1) to (3), wherein the polyolefin of component (A) is polypropylene;
(5) The film described in any one of (1) to (4), wherein the surface of the film has a structure having ridges and grooves, and the grooves have micropores;
(6) A film for printing which comprises a film described in any one of (1) to (5);
(7) A film which is a stretched film obtained from a resin composition comprising (A) a polyolefin, (B) a polyester and (C) a compatibilizing agent, wherein at least surface of the film has a mesh-shaped structure having ridges;
(8) The film described in (7), wherein the polyolefin of component (A) is polypropylene, the polyester of component (B) is an aliphatic polyester based on polylactic acid and the compatibilizing agent of component (C) is a carbodiimide compound; and
(9) A film for printing which comprises a film described in (7) or (8).

### BRIEF DESCRIPTION OF THE DRAWINGS

Figure 1 shows an electron microscope picture of the surface of a film obtained in Example 1.
Figure 2 shows an electron microscope picture of a section of a film obtained in Example 1.
Figure 3 shows an electron microscope picture of the surface of a film obtained in Example 2.
Figure 4 shows an electron microscope picture of the surface of a film obtained in Example 3.
Figure 5 shows an electron microscope picture of a section of a film obtained in Example 3.
Figure 6 shows an electron microscope picture of the surface of a film obtained in Comparative Example 1.

### THE MOST PREFERRED EMBODIMENT TO CARRY OUT THE INVENTION

The present invention will be described more specifically in the following.
The film of the present invention includes two embodiments which are (1) a film in which the surface has micropores and, preferably, a film in which the surface has a structure having ridges and grooves, and the grooves have micropores and (2) a film in which the surface has a mesh-shaped structure having ridges. The film is obtained by forming a film from a resin composition in which two incompatible resins, i.e., a polyolefin and a polyester, are compatibilized with a compatibilizing agent and, preferably, with a carbodiimide compound, followed by stretching the obtained film so that the film is made porous.

Examples of the polyolefin of component (A) in the present invention include polypropylene, high density polyethylene, medium density polyethylene, low density polyethylene, ultra low density polyethylene, linear low density polyethylene, chlorinated polyethylene, polybutylene, polybutadiene, polybutene, polymethylpentene, polystyrene, mixtures of these polyolefins and copolymers of olefins constituting the polyolefins.
As the copolymer, it is sufficient that the copolymer has a skeleton structure of a polyolefin. Examples of the copolymer include ethylene-vinyl acetate copolymers, ethylene-vinyl acetate-vinyl chloride copolymers, ethylene-vinyl chloride copolymers, propylene-vinyl chloride copolymers, ethylene-vinyl alcohol copolymers, ethylene-α-olefin copolymers, methyl acrylate-ethylene copolymers, ethyl acrylate-ethylene copolymers, maleic anhydride-ethylene copolymers, maleic anhydride-methyl acrylate-ethylene copolymers, glycidyl methacrylate-ethylene copolymers, glycidyl methacrylate-methyl acrylate-ethylene copolymers and glycidyl methacrylate-vinyl acetate-ethylene copolymers.
The polyolefin may be used singly or in combination of two or more.

Examples of the polyester of component (B) in the present invention include aliphatic polyesters which are called biodegradable plastics such as aliphatic polyesters based on polylactic acid, aliphatic polyesters based on polycaprolactone, aliphatic polyesters produced by microbes, polyhydroxyalkanoates and polybutylene succinate; aromatic polyesters such as polyethylene terephthalate, polyethylene naphthalate and polybutylene terephthalate; and mixtures of these polyesters.
The polyhydroxyalkanoate which is also called a polyhydroxyalkanoic acid is a polymer or a copolymer in which an alkanoic acid having hydroxyl group as the constituting monomer is polymerized with the ester bonding. Typical examples of the constituting monomer include 3-hydroxybutyric acid (3HB), 3-hydorxyvaleric acid (3HV) and 4-hydroxybutyric acid (4HB).

Examples of the polyester based on polylactic acid include polylactides. Examples of the polylactide include polymers and copolymers of an oxyacid such as lactic acid, malic acid and glycolic acid. Specific examples of the polylactide include polylactic acid, poly(α-malic acid), polyglycolic acid and copolymers of glycolic acid and lactic acid. More specific examples include, typically, aliphatic polyesters based on hydroxycarboxylic acids such as polylactic acid.

The aliphatic polyester based on polycaprolactone is an aliphatic polyester which can be obtained by the ring-opening polymerization of ε-caprolactone, has the repeating unit expressed by -(O(CH₂)₅CO)- and can be decomposed by many microbes although the polyester is insoluble in water. Examples of commercial products of the aliphatic polyester based on polycaprolactone include "TONE" (a trade name) marketed by NIPPON UNICAR Co., Ltd. and products of the PH series and the CBS series of "CELGREEN" (a trade name) marketed by DAICEL Co., Ltd.

The aliphatic polyester produced by a microbe is a thermoplastic polymer having a melting point derived from the living organ. Examples of the aliphatic polyester produced by a microbe include polyhydroxybutyrates (PHB), poly(hydroxybutyric acid and hydroxypropionic acid) copolymers and poly(hydroxybutyric acid and hydroxyvaleric acid) copolymers.
The above polyester may be used singly or in combination of two or more.

The compatibilizing agent which can be used in the present invention is an agent compatibilizing the polyolefin of component (A) and the polyester of component (B). Preferable examples of the compatibilizing agent include carbodiimide compounds. The carbodiimide compound is a compound having at least one carbodiimide group in the molecule. Examples of the carbodiimide compound include N, N'-phenylcarbodiimide and N, N'-di-2,6-diisopropylphenylcarbodiimide.
The carbodiimide compound can be synthesized, for example, by using a monoisocyanate or a polyisocyanate as the raw material and a phosphorus-based organic compound or an organometallic compound as the catalyst in accordance with condensation with decarboxylation at a temperature of about 70°C or higher without solvents or in an inert solvent.

As the polycarbodiimide compound having two or more carbodiimide groups, basically, compounds produced in accordance with a conventional process for producing a polycarbodiimide compound [for example, refer to the specification of United States Patent No. 2941956, Japanese Patent Publication No. Showa 47(1972)-33279, J. Org. Chem. 28, 2069-2075 (1963) and Chemical Review 1981, Vol. 81, No. 4, p619-621] can be used.

As the organic diisocyanate which is the raw material for synthesis in the production of the polycarbodiimide used in the present invention, aromatic diisocyanates, aliphatic diisocyanates, alicyclic diisocyanates and mixtures of these diisocyanates can be used. Examples of the aromatic diisocyanate include 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, mixtures of 2,4-tolylene diisocyanate and 2,6-tolylene diisocyanate, xylylene diisocyanate, tetramethylxylylene diisocyanate, 2,6-isopropylphenyl diisocyanate and 1,3,5-triisopropyl- benzene 2,4-diisocyanate.
Examples of the aliphatic diisocyanate include hexamethylene diisocyanate. Examples of the alicyclic diisocyanate include cyclohexane 1,4-diisocyanate, isophorone diisocyanate, dicyclohexylmethane 4,4'-diisocyanate and methylcyclohexane diisocyanate.

When the above polycarbodiimide is produced, the degree of polymerization can be controlled at a suitable value by terminating the polymerization during the reaction by cooling or the like means. In this case, the group at the end of the obtained polymer is isocyanate group.
As another process, the degree of polymerization can be controlled at a suitable value by entirely or partially sealing the isocyanate group remaining at the end using a compound reacting with the isocyanate group at the end of the polycarbodiimide compound such as a monoisocyanate. From the standpoint of improving the quality, it is preferable that the degree of polymerization is controlled since the compatibility with the polyolefin or the polyester polymer can be improved and the stability in storage can be improved. Examples of the monoisocyanate for controlling the degree of polymerization by sealing the end of the polycarbodiimide include phenyl isocyanate, tolyl isocyanate, dimethylphenyl isocyanate, cyclohexyl isocyanate and butyl isocyanate.

The agent for controlling the degree of polymerization by sealing the end of the carbodiimide compound is not limited to the monoisocyates described above, but compounds having active hydrogen reacting with the isocyanate can be used. Examples of the compound having active hydrogen reacting with the isocyanate include (i) aliphatic, aromatic and alicyclic compounds having -OH group such as methanol, ethanol, phenol, cyclohexanol, N-methylethanolamine, polyethylene glycol monomethyl ether and polypropylene glycol monomethyl ether; (ii) compounds having =NH group such as diethylimine and dicyclohexylimine; (iii) compounds having -NH₂ group such as butylamine and cyclohexylamine; (iv) compounds having -COOH group such as succinic acid, benzoic acid and cyclohexanoic acid; (v) compounds having -SH group such as ethyl mercaptan, allyl mercaptan and thiophenol; (vi) compounds having epoxy group; (vii) acid anhydrides such as acetic anhydride, methyl tetrahydrophthalic anhydride and methyl hexahydrophthalic anhydride. As the structure suppressing yellowing, structures having -OH group are preferable.

The condensation with decarboxylation of the above organic diisocyanate is conducted in the presence of a suitable catalyst for producing carbodiimide. As the catalyst for producing carbodiimide which can be used, phosphorus-based organic compounds and organometallic compounds represented by the general formula M-(OR)₄ [wherein M represents a metal such as titanium (Ti), sodium (Na), potassium (K), vanadium (V), tungsten (W), hafnium (Hf), zirconium (Zr), lead (Pb), manganese (Mn), nickel (Ni), calcium (Ca) and barium (Ba), and R represents an alkyl group having 1 to 20 carbon atoms or an aryl group having 6 to 20 carbon atoms] are preferable. From the standpoint of the activity, phosphorene oxides are preferable as the phosphorus-based organic compound, and alkoxides of titanium, hafnium and zirconium are preferable as the organometallic compound, among the above compounds.

Examples of the phosphorene oxide include 3-methyl-1-phenyl-2-phosphorene-1-oxide, 3-methyl-1-ethyl-2-phosphorene-1-oxide, 1,3-dimethyl-2-phosphorene-1-oxide, 1-phenyl-2-phosphorene-1-oxide, 1-ethyl-2-phosphorene-1-oxide, 1-methyl-2-phosphorene-1-oxide and isomers of these compounds with respect to the double bond. Among the above compounds, 3-methyl-1-phenyl-2-phosphorene-1-oxide is preferable since this compound is easily available industrially.

As the compatibilizing agent in the present invention, polymers having a portion essentially dissolved into or having affinity with the polyolefin and a portion essentially dissolved into or having affinity with the polyester in the molecule may be added in combination with the carbodiimide compound described above, and the added polymers may be any of block copolymers, random copolymers, graft polymers and polymers having other structures. Examples of the above polymer include styrene-ethylene-butadiene copolymers, styrene-ethylene-butadiene- styrene copolymers, hydrogenated styrene-propylene-styrene copolymers and ethylene-propylene-diene random copolymers.
Examples of other compatibilizing agent which may be added to the carbodiimide compound include reactive compatibilizing agents having double bond, carboxyl group or epoxy group. Specific examples of the above agent include ethylene-glycidyl methacrylate copolymers, ethylene-gylcidyl methacrylate-vinyl alcohol copolymers, ethylene-gylcidyl methacrylate-acrylonitrile-styrene copolymers, ethylene-gylcidyl methacrylate-styrene copolymers, ethylene-gylcidyl methacrylate-methyl methacrylate copolymers, polyethylene waxes of the acid modification type, polyethylene graft polymers modified with COOH and polypropylene graft polymers modified with COOH.

In the present invention, although the polyolefin of component (A) and the polyester of component (B) which are resins incompatible with each other are not particularly limited, polypropylene is preferable as the polyolefin among the above polyolefins, and aliphatic polyesters are preferable as the polyester among the above polyesters. Biodegradable polyesters such as aliphatic polyesters based on polylactic acid, aliphatic polyesters based on caprolactone and aliphatic polyesters produced by microbes are more preferable, and aliphatic polyesters based on polylactic acid are most preferable.
As the combination of the polyolefin and the polyester which are resins incompatible with each other, the combination of polypropylene and the biodegradable plastics such as polylactic acid, polycaprolactone and polyhydroxy butyrate is preferable, and the combination of polypropylene and the aliphatic polyester based on polylactic acid is more preferable.

As for the relative amounts of the polyolefin and the polyester, it is preferable that the amount of the polyester is 30 to 350 parts by mass, more preferably 60 to 200 parts by mass and most preferably 90 to 150 parts by mass based on 100 parts by mass of the polyolefin. As for the amount of the compatibilizing agent, it is preferable that the amount of the compatibilizing agent is 0.1 to 15 parts by mass, more preferably 0.2 to 10 parts by mass and most preferably 0.5 to 5 parts by mass based on 100 parts by mass of the sum of the amounts of the polyolefin and the polyester.

The process for mixing the polyolefin and the polyester which are resins incompatible with each other is not particularly limited. In a conventional process, for example, chips of the polyolefin, the polyester and the compatibilizing agents in each prescribed amount are mixed in a ribbon blender, a tumbler or a HENSHEL MIXER (a trade name) and then further mixed using a Banbury mixer, a single screw extruder or a twin screw extruder at a temperature of 150 to 300°C, for example. The obtained mixture is extruded from a T-die at a temperature of 150 to 300°C, and the resin composition in the form of a film can be obtained.
The process for stretching the resin composition in the form of a film is not particularly limited. Examples of the process for the biaxial stretching include a process comprising stretching in the longitudinal direction in accordance with the roll stretching and, then, stretching in the transverse direction using a tenter and a process comprising simultaneous biaxial stretching using a tenter. In the operation of stretching, it is preferable that the stretching is conducted at a temperature around the glass transition temperature which is, for example, about 60 to 120°C when polypropylene is used as the polyolefin and an aliphatic polyester based on polylactic acid is used as the polyester, and lower than the crystallization temperature of the aliphatic polyester based on polylactic acid. The film is stretched to a length, in general, about 1.5 to 5 times and preferably 2 to 3 times the original length both in the longitudinal direction and in the transverse direction. The stretching rate in the longitudinal direction may be different from that in the transverse direction. It is preferable that the stress due to shrinking of the film obtained after the stretching is adjusted by cooling in accordance with a conventional process.

The film of the present invention in which the surface has micropores of the submicron order and, preferably, in which the surface has a structure having ridges and grooves, and the grooves have micropores of the submicron order can be obtained in accordance with the biaxial stretching of the above composition in the above condition. In particular, when the relative amounts of the polyolefin and the polyester is such that the amount of the polyester is 90 to 150 parts by mass based on 100 parts by mass of the polyolefin, the film of the present invention has the characteristic such that the structure of the surface of the film has a mesh -shaped structure having ridges and openings (micropores) of the submicron order.

### EXAMPLES

The present invention will be described more specifically with reference to examples in the following. However, the present invention is not limited to the examples.

Example 1
Pellets of polypropylene (manufactured by Japan Polypropylene Corporation, "NOVATEC (a registered trade mark) PP-F203T") in an amount of 100 parts by mass, 100 parts by mass of pellets of polylactic acid (manufactured by MITSUI CHEMICALS INC., "LACEA (a registered trade mark) H-400") and 4 parts by mass of polycarbodiimide (manufactured by NISSHINBO INDUSTRIES INC., "CARBODILITE (a registered trade mark) LA-1") were mixed by a HENSHEL MIXER (a trade name). The obtained mixture was extruded at 210°C by a twin screw extruder, and pellets of a resin composition were obtained. The obtained pellets of a resin composition were extruded through a T-die at 200°C using an extruder, and a resin composition in the form of a film having a thickness of 200 µm was obtained.
The obtained film was stretched at 100°C to a length twice the original length in the direction of the flow by heated rolls and then stretched in the transverse direction to a length twice the original length, and a film having a thickness of 100 µm and micropores on the surface was obtained.

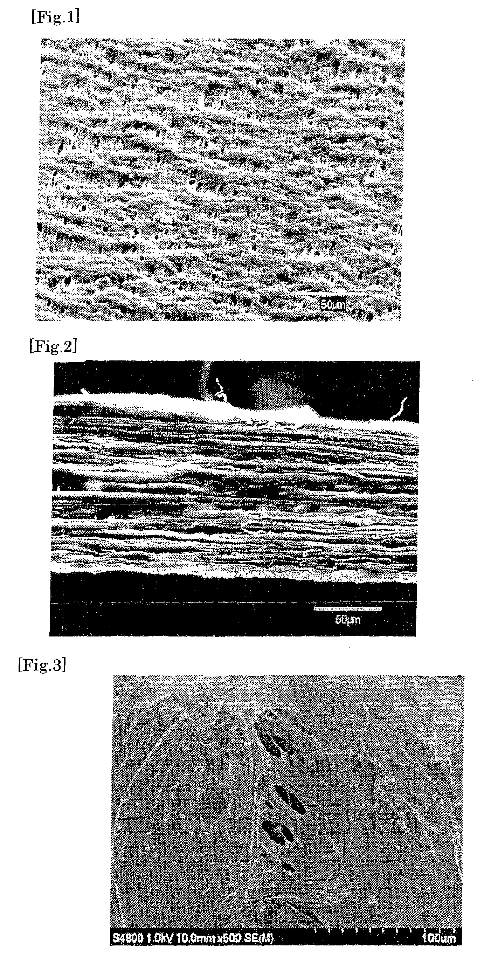

Electron microscope pictures of the surface and a section of the obtained film are shown in Figures 1 and 2, respectively. It is shown that the obtained film had a mesh -shaped structure having ridges on the surface of the film and pores of the submicron order were formed between minute ridges.

Example 2
A resin composition in the form of a film having a thickness of 200 µm was obtained in accordance with the same procedures as those conducted in Example 1 except that 300 parts by mass of the pellets of polylactic acid and 2 parts by mass of the polycarbodiimide were used.
The obtained resin composition in the form of a film was stretched in accordance with the same procedures as those conducted in Example 1, and a film having a thickness of 100 µm and micropores on the surface was obtained.

An electron microscope picture of the surface of the obtained film is shown in Figure 3. It is shown that the obtained film had a mesh-shaped structure having pores of the submicron order on the surface.

Example 3
A resin composition in the form of a film having a thickness of 200 µm was obtained in accordance with the same procedures as those conducted in Example 1 except that 33 parts by mass of the pellets of polylactic acid and 2 parts by mass of the polycarbodiimide were used.
The obtained resin composition in the form of a film was stretched in accordance with the same procedures as those conducted in Example 1, and a film having a thickness of 100 µm and micropores on the surface was obtained.

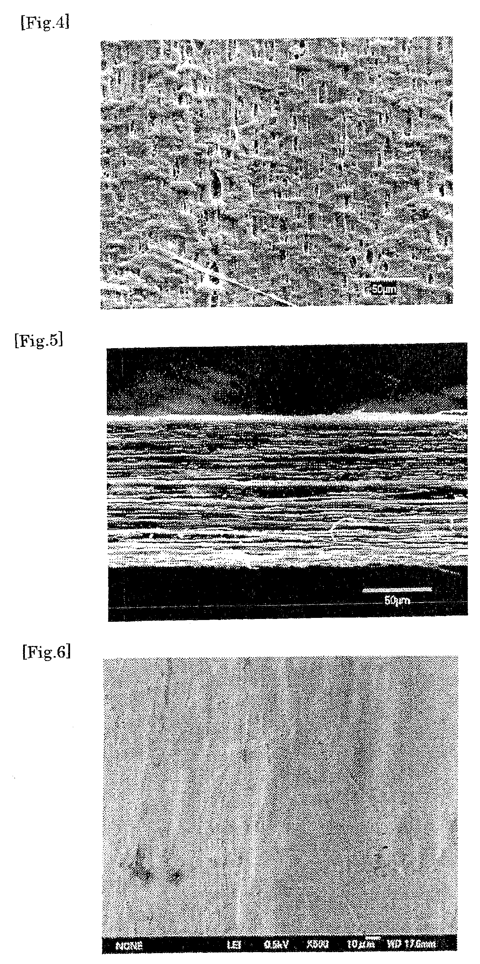

Electron microscope pictures of the surface and a section of the obtained film are shown in Figures 4 and 5, respectively. It is shown that the obtained film had a mesh -shaped structure having pores of the submicron order on the surface although the surface did not have portions of ridges.

Comparative Example 1
A film was obtained in accordance with the same procedures as those conducted in Example 1 except that the polycarbodiimide was not used.
An electron microscope picture of the surface of the obtained film is shown in Figure 6. It is shown that the obtained film had no pores of the submicron order on the surface when the polycarbodiimide was not used.

Comparative Example 2
A resin composition in the form of a film having a thickness of 200 µm was obtained in accordance with the same procedures as those conducted in Example 2 except that 500 parts by mass of the pellets of polylactic acid was used.
When the obtained film was stretched in accordance with the same procedures as those conducted in Example 1, the resin composition in the form of a film was broken, and no film having micropores was obtained.

Comparative Example 3
A resin composition in the form of a film having a thickness of 200 µm was obtained in accordance with the same procedures as those conducted in Example 2 except that 10 parts by mass of the pellets of polylactic acid was used.
When the obtained film was stretched in accordance with the same procedures as those conducted in Example 1, the resin composition in the form of a film was broken, and no film having micropores was obtained.

Example 4
Using the films having micropores on the surface obtained in Examples 1 to 3 and the film having no micropores on the surface obtained in Comparative Example 1, the property for printing was evaluated in accordance with the following methods. The results are shown in Table 1.

### (1) Test of absorption of an aqueous ink

Using an ink containing an aqueous dye (manufactured by Shachihata Inc., SHACHIHATA STAMP INK S-1 BLACK) and a stamp of a character, an image was printed on a film, and the property for absorption of the ink was evaluated. The printed image was rubbed with a soft cloth 30 seconds after being printed, and the property for absorption of the ink was evaluated in accordance with the following criterion:
excellent: the image little blurred
good: the image blurred, but the character readable
poor: the image lost, and the character not readable

### (2) Test of setting of printing

Solid printed image was made on a film using a tester of the RI-2 type (manufactured by IHI Corporation.) and an ink manufactured by DIC Corporation having a trade name: "FUSION G N INDIGO" under the condition of the applied amount of the ink of 0.2 g, and transcription of the image printed with the ink was examined. For the examination of transcription of the image printed with the ink, paper was pressed against the portion of the printed image for transcription of the image 120 minutes after the printing was made. The result was evaluated in accordance with the following criterion:
good: excellent property for setting with little transcription
poor: poor property for setting with significant transcription

[Table 1]

**Table 1**

| | Example 1 | Example 2 | Example 3 | Comparative Example 1 |
|---|---|---|---|---|
| Polyolefin (part by mass) | 100 | 100 | 100 | 100 |
| Polyester (part by mass) | 100 | 300 | 33 | 100 |
| Compatibilizing agent (part by mass) | 4 | 2 | 2 | 0 |

| Surface structure of film | structure having ridges | structure having ridges and grooves | structure having ridges and grooves | no pores formed |
|---|---|---|---|---|
| Property for printing (absorption of aqueous ink) | excellent | good | good | poor |
| Property for printing (setting of printing) | good | good | good | poor |

### INDUSTRIAL APPLICABILITY

The film of the present invention has micropores of the submicron order at least on the surface and has a structure having ridges and grooves or a mesh -shaped structure having ridges. Since the vehicle components (mainly oils and solvents) of an ink are absorbed into micropores and the coloring components can be accepted on the surface of the film in printing using a printing ink, the film exhibits excellent property for printing.

## Claims

1. A film which is a stretched film obtained from a resin composition comprising (A) a polyolefin, (B) a polyester in an amount of 30 to 350 parts by mass based on 100 parts by mass of the polyolefin, and (C) a compatibilizing agent in an amount of 0.1 to 15 parts by mass based on 100 parts by mass of a sum of amounts of component (A) and component (B), wherein surface of the film has micropores.

2. The film according to Claim 1, wherein the compatibilizing agent of component (C) is a carbodiimide compound.

3. The film according to Claim 1 or 2, wherein the polyester of component (B) is an aliphatic polyester based on polylactic acid.

4. The film according to any one of Claims 1 to 3, wherein the polyolefin of component (A) is polypropylene.

5. The film according to any one of Claims 1 to 4, wherein the surface of the film has a structure having ridges and grooves, and the grooves have micropores.

6. A film for printing which comprises a film described in any one of Claims 1 to 5.

7. A film which is a stretched film obtained from a resin composition comprising (A) a polyolefin, (B) a polyester and (C) a compatibilizing agent, wherein at least surface of the film has a mesh-shaped structure having ridges.

8. The film according to Claim 7, wherein the polyolefin of component (A) is polypropylene, the polyester of component (B) is an aliphatic polyester based on polylactic acid and the compatibilizing agent of component (C) is a carbodiimide compound.

9. A film for printing which comprises a film described in any one of Claims 7 and 8.
